# EUROPÄISCHE PATENTSCHRIFT

(11) **EP 0 529 366 B1**
(45) Veröffentlichungstag und Bekanntmachung des Hinweises auf die Patenterteilung: **12.04.1995**
(21) Anmeldenummer: 92113425.0
(22) Anmeldetag: 06.08.1992
(51) Int. Cl.: H02M 3/335

(54) **Schaltender Umrichter mit Stromsensor**
Switching converter with current sensor
Convertisseur à découpage avec capteur de courant

(30) Priorität: 28.08.1991 EP 91114485
(43) Veröffentlichungstag der Anmeldung: 03.03.1993
(73) Patentinhaber: SIEMENS AKTIENGESELLSCHAFT, 80333 München (DE)
(72) Erfinder: Preis, Josef, Dipl.-Ing., W-8000 München 60 (DE)

(56) Entgegenhaltungen:
- EP-A- 0 404 996
- US-A- 4 811 184
- US-A- 4 866 588
- US-A- 4 928 220

## Beschreibung

Die Erfindung bezieht sich auf einen wie im Oberbegriff des Patentanspruchs 1 angegebenen Umrichter mit einem Stromsensor und einem Komparator.

Aus der DE-B1-28 38 009 ist bereits ein Umrichter mit Momentanwertstrombegrenzung bekannt, bei dem Anfangsstromspitzen für die Momentanwertstrombegrenzung unwirksam gemacht werden. Bei dem bekannten Umrichter wird ein Schalttransistor durch einen Taktgeber mit Einschaltimpulsen konstanter Arbeitsfrequenz angesteuert. Zur Regelung der Ausgangsspannung wird der Tastgrad, d.h. der Quotient der Einschaltzeit des Leistungsschalttransistors zur Periodendauer verändert. Bei Überlast am Ausgang des Gleichstromumrichters wird zum Schutz der Bauteile der Strom im Leistungskreis begrenzt. Dies wird durch Absenken der Ausgangsspannung bei zulässigem Ausgangsstrom mittels Verkürzung der Einschaltzeit erreicht. Dabei wird der Schalttransistor gesperrt, sobald der gemessene Momentanwert des durch den Schalttransistor fließenden Stromes einen vorgegebenen Grenzwert übersteigt.

Der bekannte Umrichter enthält zu diesem Zweck eine Strombegrenzungsschaltung mit einem Stromwandler als Stromsensor. Diesem Stromsensor ist ein RC-Filter als Tiefpaß nachgeschaltet, so daß die Bürdenspannung von Einschaltstromspitzen befreit wird. Auf diese Weise wird vermieden, daß die Sperrung des Schalttransistors fälschlicherweise vorzeitig durch die Einschaltstromspitze ausgelöst wird.

Allerdings kann das RC-Glied nur für einen bestimmten Strom optimal dimensioniert werden. Die Verwendung eines derartigen Tiefpasses führt daher nur bei vergleichsweise kleinen Strom- und Eingangsspannungebereichen zum gewünschten Ergebnis.

Weiterhin ist aus der EP 0 404 996 A1 bereits ein schaltender Umrichter bekannt, der eine Schaltungsanordnung zur Stromistwertbildung mit einen einpolig an Bezugspotential liegenden Stromsensor und einer Vorrichtung zur elektronischen Unterdrückung der Einschaltstromspitzen enthält. Die Schaltungsanordnung zur Stromistwertbildung enthält einen zwischen dem Stromsensor und einem Kondensator angeordneten Feldeffekttransistor. Dieser Feldeffekttransistor wird so gesteuert, daß er je Einschaltphase des im Hauptstromkreis angeordneten elektronischen Schalters während der Anfangsstromspitze des den Stromsensor durchfließenden Stromes gesperrt und während der restlichen Zeit des Stromimpulses leitend gesteuert ist. Mit Hilfe des Feldeffekttransistors wird der Stromsensor während der Dauer der Einschaltstromspitze, die unabhängig von der Strombelastung des Umrichters ist, vom Kondensator abgetrennt. Während der restlichen Zeit der Stromflußdauer ist das Signal dagegen voll durchgeschaltet. Am Kondensator steht daher der eine dem Stromistwert proportionale und von den Einschaltstromspitzen weitgehend befreite Spannung zur weiteren Auswertung zur Verfügung.

Parallel zum Ausgang der Schaltungsanordnung zur Stromistwertbildung liegt ein Widerstand, der niederohmig gegenüber dem Gatevorwiderstand des Feldeffekttransistors ist und der zur potentialmäßigen Anbindung der Source der Feldeffekttransistors an das Bezugspotential dient. Um das Meßsignal nicht wesentlich zu verfälschen, ist der Widerstand andererseits hochohmig gegenüber dem Widerstand R_{DS on} des leitend gesteuerten Feldeffekttransistors zu bemessen.

Ferner ist aus der US 4 928 220 ein schaltender Umrichter mit einer Vorrichtung zur elektronischen Unterdrückung der Einschaltstromspitzen bekannt. Die Schaltungsanordnung zur Stromistwertbildung enthält einen zwischen dem Stromsensor und einem Kondensator angeordneten Feldeffekttransistor. Dieser Feldeffekttransistor liegt in einem Querzweig und ist während der Anfangsstromspitze des den Stromsensor durchfließenden Stromes leitend gesteuert, so daß die mit Hilfe des Stromsensors gewonnene Meßspannung kurzgeschlossen wird. Um die Meßspannung für die Momentanwertstrombegrenzung freizugeben, muß der Feldeffekttransistor vom leitenden in den gesperrten Zustand überführt werden. Die hierfür erforderliche Zeit weist auch aus technologischen Gründen relativ große Toleranzen auf, die sich insbesondere dann nachteilig auswirken können, wenn ein Betrieb des Umrichters bei vergleichsweise hohen Schaltfrequenzen gewünscht wird.

Aufgabe der Erfindung ist es, den im Oberbegriff des Patentanspruchs 1 angegebenen schaltenden Umrichter mit Stromsensor und Komparator derart auszubilden, daß Einschaltstromspitzen der den Stromsensor durchfließenden Stromimpulse bei der Auswertung des Stromistwertes nicht wirksam sind, ohne daß dabei die Bildung einer von den Einschaltstromspitzen befreiten, dem Stromistwert proportionalen Spannung erforderlich ist.

Es ist eine Erkenntnis im Rahmen der Erfindung, daß bei schaltenden Umrichtern der eingangs genannten Art der zeitliche Verlauf des gemessenen Stromistwertes in einem ersten, mit dem Schließen des im Hauptstromkreis liegenden elektronischen Schalters beginnenden Zeitbereich für die Auswertung durch den Komparator ohne Belang ist, wenn der Komparator in diesem Zeitbereich, der mit Sicherheit die Einschaltstromspitze ein- und den Ansprechzeitpunkt des Komparators ausschließt, in einem vorgegebenen Betriebszustand festgehalten wird.

Ausgehend von dieser Erkenntnis wird der Umrichter gemäß der Erfindung zur Lösung der genannten Aufgabe in der im kennzeichnenden Teil des Patentanspruchs 1 angegebenen Weise ausgebildet. Liegt der elektronische Schalter der Komparatoranordnung parallel zu einem Teilwiderstand der Widerstands- Serienschaltung, so hat der Sollwert im ersten Betriebszustand des Komparators einen Betrag, der über der aus der Anfangsstromspitze resultierenden Meßspannung liegt. In einem Zeitraum, der den Umschaltzeitpunkt des Komparators einschließt, hat der Sollwert die normale Größe.

Durch die erfindungsgemäßen Maßnahmen ergibt sich der Vorteil, daß zur exakten Strombegrenzung in einem großen Lastbereich keine Vorrichtung zur Bildung eines von Einschaltstromspitzen befreiten Istwertes erforderlich ist. Von besonderem Vorteil ist dabei, daß die Schaltungsanordnung zur Stromistwertbildung keinen elektronischen Schalter benötigt, bei dem eine exakte Definition des Bezugspotentials Schwierigkeiten bereiten könnte, oder der während der Einschaltstromspitzen leitend ist und zu einem darauffolgenden Zeitpunkt vom leitenden in den gesperrten Zustand überführt werden muß.

Der zur Umschaltung des Komparators vorgesehene elektronische Schalter wird zweckmäßiger Weise mit Hilfe eines Umschaltsignalgebers gesteuert, der aus den zur Steuerung des im Hauptstromkreis angeordneten elektronischen Schalters dienenden Steuerimpulsen geeignete Umschaltsignale bildet. Der Umschaltsignalgeber besteht vorzugsweise aus einer R-C-Serienschaltung.

Dabei ist jeweils ein Umschaltsignalgeber nach Anspruch 3 von besonderem Vorteil.

Die Erfindung wird anhand der in den Figuren 1 und 2 dargestellten Ausführungsbeispiele sowie anhand der aus den Figuren 3 bis 5 ersichtlichen Diagramme näher erläutert.

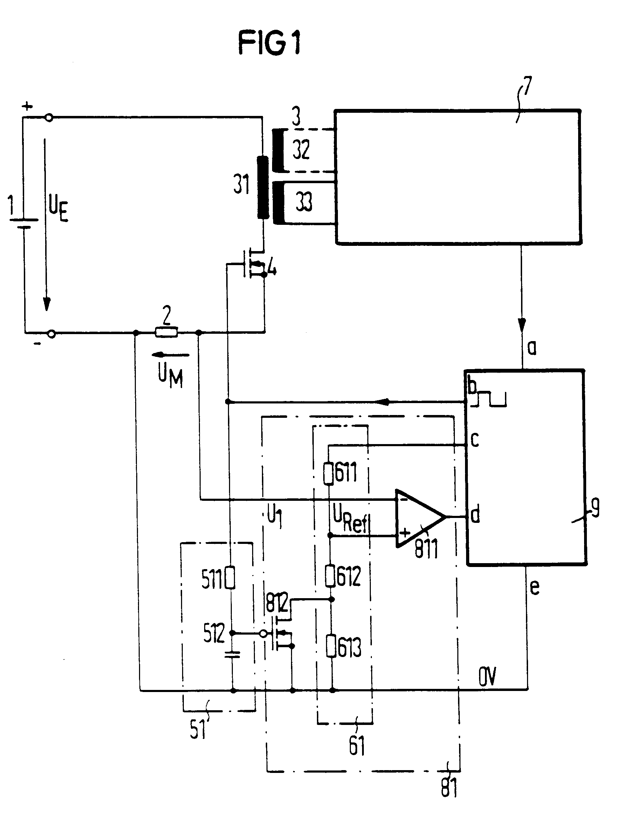

Es zeigen
- Fig. 1: einen schaltenden Umrichter mit einem elektronischen Schalter am Sollwerteingang eines Komparators,

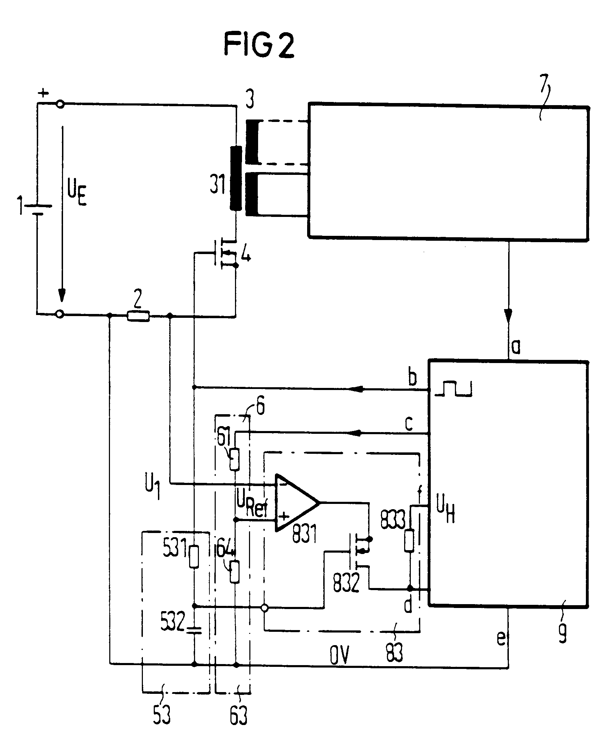

- Fig. 2: einen schaltenden Umrichter mit einem elektronischen Schalter am Ausgang eines Komparators,

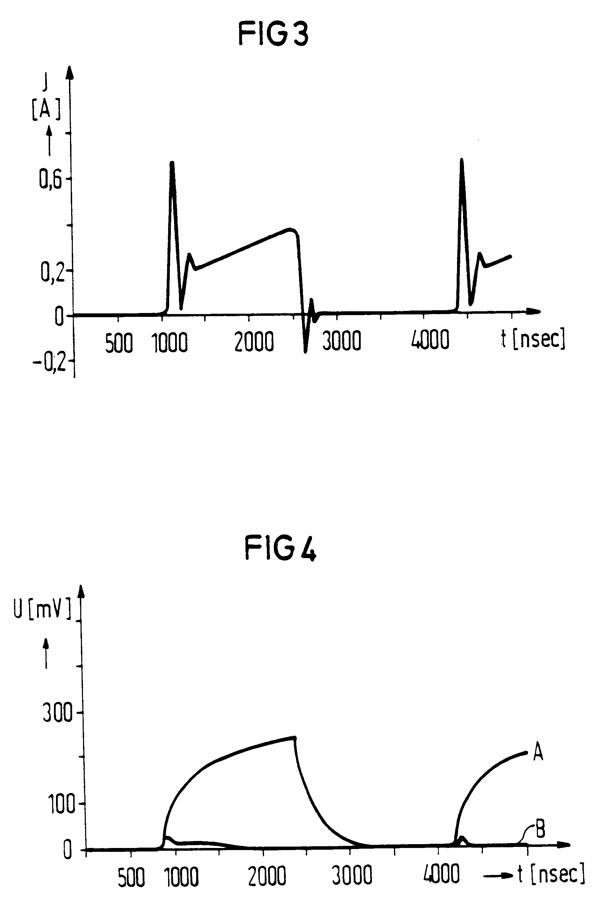

- Fig. 3: den zeitlichen Verlauf eines Stromimpulses mit überlagerter Einschaltstromspitze,
- Fig. 4: den zeitlichen Verlauf einer Meßspannung bei herkömmlicher Tiefpaßfilterung bei unterschiedlich großem Strom und

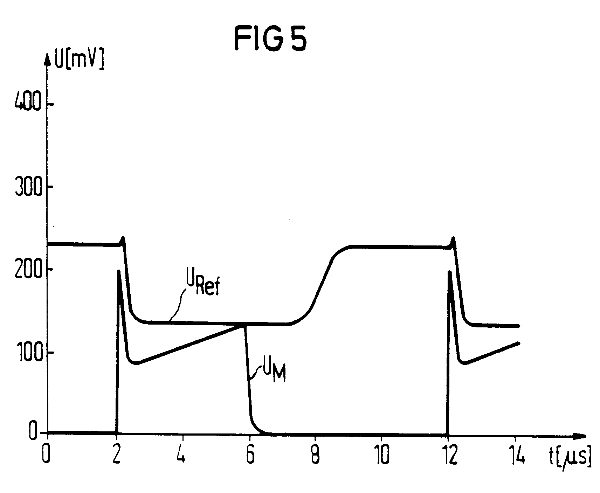

- Fig. 5: den zeitlichen Verlauf eines Meßsignals am Stromsensor und einer Referenzspannung für den Umrichter nach Fig. 1.

Der in Fig. 1 gezeigte Umrichter wird aus der Eingangsspannungsquelle 1 mit der Eingangsspannung U_{E} gespeist. Parallel zur Eingangsspannungsquelle 1 liegt eine aus der Primärwicklung 31 des Transformators 3, der Source-Drain-Strecke des Feldeffekttransistors 4 und dem durch einem Meßwiderstand gebildeten Stromsensor 2 gebildete Serienschaltung. Anstelle des Meßwiderstandes 2 kann als Stromsensor gegebenenfalls ein Stromwandler Verwendung finden.

An die Sekundärwicklung 33 des Transformators 3 ist die einen Sekundär-Leistungskreis enthaltende Ausgangsanordnung 7 angeschlossen.

Die strichlierte Verbindung der weiteren Sekundärwicklung 32 mit der Ausgangsanordnung 7 bringt zum Ausdruck, daß die Ausgangsanordnung 7 mehrere Sekundär-Leistungskreise enthalten kann, die jeweils an eine Ausgangswicklung des Transformators 3 angeschlossen sind.

Der Feldeffekttransistor 4 ist mit seiner Gate-Elektrode an den Ausgang b der Steuerschaltung 9 angeschlossen, die ihrerseits mit dem Eingang a am Ausgang der Ausgangsschaltung 7 liegt. Der Anschluß e der Steuerschaltung 9 und ein Anschluß des Stromsensors 2 liegen am Minuspol der Eingangsspannungs- quelle 1, der das Bezugspotential 0 Volt hat.

Dem Eingang d der Steuerschaltung 9 ist der Komparator 811 vorgeschaltet, dessen nichtinvertierender Referenzeingang + an einem Abgriff des Spannungsteilers 61 liegt und dessen invertierender Istwerteingang - mit dem gegenüber dem Bezugspotential Spannung führenden Anschluß des Stromsensors 2 verbunden ist.

Der Spannungsteiler 61 besteht aus den Widerständen 611, 612 und 613 und ist zwischen dem Referenzspannungsausgang c der Steuerschaltung 9 und dem Bezugspotential 0 Volt angeordnet. Der Widerstand 611 liegt zwischen dem Ausgang c der Steuerschaltung 9 und dem Referenzsollwerteingang + des Komparators 811. Zwischen dem Istwerteingang + des Komparators 811 und dem Bezugspotential 0 Volt liegt die aus den Widerständen 612 und 613 bestehende Serienschaltung.

Parallel zum Widerstand 613 liegt die Source-Drain-Strecke des Feldeffekttransistors 812. Die Gate-Elektrode des Feldeffekttransistors 812 liegt am Ausgang des Umschaltsignalgebers 51.

Der Umschaltsignalgeber 51 besteht aus einer RC-Serienschaltung, die zwischen dem Ausgang b der Steuerschaltung 9 und dem Bezugspotential 0 Volt angeordnet ist. Der Widerstand 511 der RC-Serienschaltung liegt zwischen dem Ausgang b der Steuerschaltung 9 und der Gate-Elektrode des Feldeffekttransistors 812. Der Kondensator 512 der RC-Serienschaltung ist zwischen der Gate-Elektrode des Feldeffekttransistors 812 und dem Bezugspotential 0 Volt angeordnet.

Bei dem schaltenden Umrichter nach Fig. 1, der insbesondere ein Durchfluß- und/oder Sperrwandler sein kann, steigt der Strom im Primärkreis während der Einschaltdauer des durch den Feldeffekttransistor 4 gebildeten primären Leistungshalbleiter rampenförmig an. Dieser Strom führt mittels des Stromsensors 2 in die Meßspannung U_{M} umgesetzt und mit Hilfe der Steuerschaltung 9 als Stromistwert zur Strombegrenzung und/oder zur Stromregelung mit überlagerter Spannungsregelung (Current-Mode-Spannungsregelung) benutzt, bei der als Sollwert des Stromes das Ausgangssignal eines Spannungsreglers dient.

Durch Kapazitäten und Sperrverzögerung anderer beteiligter Leistungshalbleiter auf der Primär- und/oder Sekundärseite des Umrichters ist den Stromimpulsen jeweils eine unvermeidliche Einschalt- bzw. Anfangsstromspitze überlagert, wie sie in Fig. 3 beispielhaft gezeigt ist.

Bei dem eingangs genannten bekannten Umrichter, der die Einschaltstromspitze mit Hilfe eines Tiefpaßes unterdrückt, ergeben sich die Kurve A für einen großen Strom und B für einen kleinen Strom. Wie ein Vergleich der beiden Kurven zeigt, ist die Unterdrückung der Einschaltstromspitze mit Hilfe des Tiefpaßes bei größeren Strombereichen mit erheblichen Verfälschungen des Meßsignals verbunden, da das RC-Glied nur für einen bestimmten Strom optimal dimensioniert werden kann.

Bei dem Umrichter nach Fig. 1 wird die Meßspannung U_{M} mit der Einschaltstromspitze unmittelbar dem Istwertereingang des Komparators 811 zugeführt. Maßnahmen zur Ausblendung der Einschaltstromspitze sind dabei nicht vorgesehen. Die Einschaltstromspitze ist dabei in vorteilhafter Weise ohne Einfluß auf die Auswertung der Meßspannung durch den Komparator 811.

Die Dauer der Einschaltstromspitze ist unabhängig von der Strombelastung des Umrichters. Wie Fig. 5 zeigt, ist in einem Zeitbereich, der die Einschaltstromspitze einschließt, der Feldeffekttransistor 812 gesperrt, so daß der Widerstand 613 des Spannungsteilers 61 wirksam ist. Die dabei am Referenz- werteingang + des Komparators 811 liegende Referenzspannung U_{REF} ist so groß bemessen, daß sie den durch die Einschaltstromspitze gegebenen Spitzenwert der Meßspannung U_{M} überragt. Der Komparator 811 befindet sich daher zunächst in einem ersten Betriebszustand, in dem er an seinem Ausgang hohes Potential abgibt.

Nach einer darauffolgenden Zeitspanne, die den möglichen Ansprechzeitpunkt des Komparators 811 umfaßt, wird der Feldeffekttransistor 812 leitend gesteuert. Dieser Vorgang ist nach relativ kurzer Zeit beendet. Beispielsweise beträgt beim insbesondere verwendeten Feldeffektransistor BSS98 die zum Leitendsteuern benötigte Zeit etwa die Hälfte der Zeit, die zum Sperren erforderlich ist.

Im leitend gesteuerten Zustand des Feldeffekttransistors 812 ist der Widerstand 613 kurzgeschlossen, so daß die Referenzspannung U_{REF} auf den Referenzwert gesetzt ist. In diesem zweiten Betriebszustand des Komparators findet der gewünschte Vergleich zwischen Istwert und Referenzwert statt. Zum Umschaltzeitpunkt des Komparators 811 springt das Potential am Ausgang auf den niedrigen Wert, wodurch im Falle der Momentanwert-Strombegrenzung der Feldeffekttransistor 4 gesperrt wird.

Zu einem Zeitpunkt, der mit Sicherheit auf den Ansprechzeitpunkt des Komparators folgt und vor der nächsten Einschalt- stromspitze liegt, wird der Feldeffekttransistor 812 wieder gesperrt.

Der Umschaltsignalgeber 51 erzeugt aus den Einschaltimpulsen, die den Feldeffekttransistor 4 einschalten, verzögerte Einschaltimpulse für den Feldeffekttransistor 812. Die Zeitverzögerung ist durch das RC-Glied 511, 512 bestimmt.

Das Tastverhältnis der Einschaltimpulse, gegebenen durch das Verhältnis von Einschaltdauer zu Periodendauer, beträgt höchstens 0,5. Der Feldeffekttransistor 812, der das Referenzpotential U_{REF} des auswertenden Komparators 811 kurzzeitig über den Spannungspegel der Spitze hinaus anhebt ist daher auf jeden Fall zu Beginn der nächsten Leitendphase des Feldeffekttransistors 4 wieder im gesperrten und der Komparator 811 im ersten Betriebszustand.

Die Komparatoranordnung 81 und der Umschaltsignalgeber 51 sind problemlos zu dimensionieren, da exakt definierte Verhältnisse hinsichtlich Bezugspotential und Ansteuersignal gegeben sind.

Der Umrichter nach Fig. 2 unterscheidet sich von dem nach Fig. 1 dadurch, daß der elektronische Schalter der Komparatoranordnung 83 am Ausgang des Komparators 831 angeordnet ist. Der Feldeffekttransistor 832 liegt mit der Source-Elektrode am Ausgang des Komparators 831, mit der Drain-Elektrode am Eingang d der Steuerschaltung 9 und mit der Gate-Elektrode am Ausgang des Umschaltsignalgebers 53. Zwischen dem Ausgang f für die Hilfsspannung U_{H} der Steuerschaltung 9 und dem Eingang d der Steuerschaltung 9 liegt der Widerstand 833. Der Umschaltsignalgeber 53 ist durch eine RC-Serienschaltung gebildet, deren Widerstand 531 zwischen dem Ausgang b der Steuerschaltung und der Gate-Elektrode des Feldeffekttransistors 832 liegt und dessen Kondensator 532 zwischen der Gate- Elektrode des Feldeffekttransistors 832 und dem Bezugspotential 0 Volt angeordnet ist.

Der Feldeffekttransistor 832 wird gegenüber dem Feldeffekttransistor 7 zeitverzögert leitend gesteuert. Das von der Einschaltstromspitze verursachte, schädliche Low-Signal am Ausgang des Komparators 831 kann daher in der Steuerschaltung 9 nicht wirksam werden.

## Patentansprüche

1. Schaltbarer Umrichter mit einem in einem Hauptstromkreis angeordneten elektronischen Schalter (4) insbesondere als Durchfluß- und/oder als Sperrwandler ausgebildet, mit einem einpolig an einem Bezugspotential liegenden Stromistwertgeber, der einen in Serie zum elektronischen Schalter (4) liegenden, von rampenförmigen Stromimpulsen durchflossenen Stromsensor (2) enthält, mit einem zur Momentanwertstrombegrenzung dienenden Komparator (811, 831), wobei der Komparator (811, 831) mit einem Referenzspannungseingang (+) an einen Referenzspannungsgeber und mit einem Istwerteingang (-) an den Stromistwertgeber angeschlossen ist und an seinem Ausgang bei in bezug auf die Spannung am Referenzspannungseingang (+) kleineren am Istwerteingang (-) liegenden Spannungen ein erstes Ausgangspotential und bei in bezug auf Spannung am Referenzspannungseingang (+) größeren am Istwerteingang (-) liegenden Spannungen ein zweites Ausgangspotential abgibt, und wobei an die Komparatoranordnung (81, 83) eine Steuerschaltung (9) angeschlossen und ein Ausgang der Steuerschaltung (9) an den Steuereingang des im Hauptstromkreis angeordneten elektronischen Schalters (4) geführt ist, mit einem elektronischen Schalter (811, 831), der durch einen Umschaltsignalgeber (51, 53) steuerbar ist und mit dessen Hilfe Anfangsstromspitzen des den Stromsensor (2) durchfließenden Stromes für die Momentanwertstrombegrenzung unwirksam gemacht werden,
**dadurch gekennzeichnet**, daß der elektronische Schalter (812) der Komparatoranordnung (81) durch den Umschaltsignalgeber (51) jeweils während der Anfangsstromspitze gesperrt ist und entweder parallel zu einem einpolig mit dem Bezugspotential verbundenen Teilwiderstand (613) einer zwischen dem Referenzspannungseingang (+) des Komparators (8) und dem Bezugspotential (0 Volt) liegenden Widerstands-Serienschaltung (61, 63) oder in Serie zum Ausgang des Komparators (831) angeordnet und jeweils während der Anfangsstromspitze des den Stromsensor (2) durchfließenden Stromes gesperrt ist und daß bei Anordnung des elektronischen Schalters in Serie zum Ausgang des Komparators zwischen dem Eingang (d) der Steuerschaltung (9) und einer Quelle für das erste Potential (U_{H}) ein Widerstand (833) angeordnet ist.

2. Umrichter nach Anspruch 1,
**dadurch gekennzeichnet**,
daß der Umschaltsignalgeber (51, 53) eine an den Ausgang der Steuerschaltung angeschlossene Verzögerungsschaltung enthält, deren Verzögerungszeit nach dem Ende der Einschaltstromspitze abläuft und kleiner als der minimale zeitliche Abstand der den elektronischen Schalter des Hauptstromkreises steuernden Impulse ist.

3. Umrichter nach Anspruch 1 oder 2,
**dadurch gekennzeichnet**,
daß der Umschaltsignalgeber (51, 53) durch ein RC-Glied (511, 512; 531, 532) gebildet ist, und daß die Steuerstrecke des elektronischen Schalters der Komparatoranordnung an den Kondensator des RC-Gliedes angeschlossen ist.

## Claims

1. Switchable converter having an electronic switch (4) which is arranged in a main circuit and is preferably designed as a forward converter and/or as a flyback converter, having an actual current value transmitter, one pole of which is connected to a reference-earth potential and which contains a current sensor (2) which is connected in series with the electronic switch (4) and through which current pulses in the form of ramps flow, having a comparator (811, 831) which is used for limiting the instantaneous value of the current, the comparator (811, 831) being connected by means of a reference-voltage input (+) to a reference-voltage transmitter and by means of an actual value input (-) to the actual current value transmitter, and, when the voltages applied to the actual value input (-) are less than the voltage on the reference-voltage input (+), emits a first output potential at the output of said comparator (811, 831) and, when the voltages which are applied to the actual value input (-) are greater than the voltage on the reference-voltage input (+), emits a second output potential, and a control circuit (9) being connected to the comparator arrangement (81, 83), and one output from the control circuit (9) being passed to the control input of the electronic switch (4) which is arranged in the main circuit, having an electronic switch (811, 831) which can be controlled by a changeover signal transmitter (51, 53) and with whose aid initial current surges of the current flowing through the current sensor (2) can be made ineffective for limiting the instantaneous value of the current, characterized in that the electronic switch (812) of the comparator arrangement (81) is in each case inhibited during the initial current surges by the changeover signal transmitter (51), and is arranged either parallel to a resistor element (613), one pole of which is connected to the reference-earth potential, of a series-resistor circuit (61, 63) which is connected between the reference-voltage input (+) of the comparator (8) and the reference-earth potential (zero volts), or in series with the output from the comparator (831), and is in each case inhibited during the initial current surge of the current flowing through the current sensor (2), and in that, when the electronic switch is arranged in series with the output from the comparator, a resistor (833) is arranged between the input (d) of the control circuit (9) and a source for the first potential (U_{H}).

2. Converter according to Claim 1, characterized in that the changeover signal transmitter (51, 53) contains a delay circuit which is connected to the output from the control circuit and whose delay time elapses after the end of the inrush current surge and is less than the minimum time interval between the pulses which control the electronic switch of the main circuit.

3. Converter according to Claim 1 or 2, characterized in that the changeover signal transmitter (51, 53) is formed by an RC element (511, 512; 531, 532), and in that the control path of the electronic switch of the comparator arrangement is connected to the capacitor of the RC element.

## Revendications

1. Convertisseur commutable comportant un interrupteur électronique (4), ayant notamment la forme d'un convertisseur direct et/ou d'un convertisseur à récupération, disposé dans le circuit principal et comportant un transmetteur de valeur réelle du courant, qui est raccordé par un pôle à un potentiel de référence et qui contient un détecteur de courant (2) branché en série avec l'interrupteur électronique (4) et traversé par des impulsions de courant en forme de rampes, et comportant un comparateur (811,831) utilisé pour la limitation de la valeur instantanée du courant, et dans lequel le comparateur (811,832) est raccordé par une entrée de tension de référence (+) à un générateur de tension de référence et par une entrée de valeur réelle (-) au transmetteur de valeur réelle du courant, et délivre, sur sa sortie, un premier potentiel de sortie dans le cas de tensions présentes à l'entrée de valeur réelle (-), qui sont inférieures à la tension appliquée à l'entrée de tension de référence (+), et un second potentiel de sortie, dans le cas de tensions appliquées à l'entrée de valeur réelle (-), qui sont supérieures à des tensions appliquées à l'entrée de tension de référence (+), et dans lequel un circuit de commande (9) est raccordé au dispositif comparateur (81,83), et une sortie du circuit de commande (9) est raccordée à l'entrée de commande de l'interrupteur électronique (4) disposé dans le circuit principal, et comportant un interrupteur électronique (812,832), qui peut être commandé par un générateur de signaux de commutation (51,53) et à l'aide duquel des pointes initiales du courant traversant le détecteur de courant (2) sont rendues inactives pour la limitation de la valeur instantanée du courant,
caractérisé par le fait que l'interrupteur électronique (812) du dispositif comparateur (81) est bloqué respectivement pendant les pointes de courant initiales, par le générateur de signaux de commutation (51) et est branché soit en parallèle à une résistance partielle (613), reliées par un pôle à potentiel de référence, d'un circuit série (61,63) de résistances situé entre l'entrée de tension de référence (+) du comparateur (8) et le potentiel de référence (0 volt), soit est branché en série avec la sortie du comparateur (831) et est bloqué respectivement pendant les pointes initiales du courant traversant le détecteur de courant (2), et que dans le cas où l'interrupteur électronique est branché en série avec la sortie du comparateur, une résistance (833) est disposée entre l'entrée (d) du circuit de commande (9) et une source pour le premier potentiel (U_{H}).

2. Convertisseur suivant la revendication 1, caractérisé par le fait que le générateur de signaux de commutation (51,53) contient un circuit de retardement, qui est raccordé à la sortie du circuit de commande et dont le retard s'achève à la fin de la pointe du courant de branchement et est inférieur à l'intervalle de temps minimum entre les impulsions qui commandent l'interrupteur électronique du circuit principal.

3. Convertisseur suivant la revendication 1 ou 2, caractérisé par le fait que le générateur de signaux de commutation (51,53) est formé par un circuit RC (511,512; 531,532), et que la section de commande de l'interrupteur électronique du dispositif comparateur est raccordée au condensateur du circuit RC.
